# EUROPEAN PATENT SPECIFICATION

(11) **EP 4 017 817 B1**
(45) Date of publication and mention of the grant of the patent: **26.02.2025**
(21) Application number: 20807538.2
(22) Date of filing: 10.11.2020
(51) Int. Cl.: B65G 57/06, B65G 57/24, B65G 61/00

(54) **LAYERING HEAD, COLUMN PALLETIZER AND METHOD FOR POPULATING A PALLET**
LEGEKOPF, KOLONNENPALETTIERVORRICHTUNG UND VERFAHREN ZUM BESTÜCKEN EINER PALETTE
TÊTE DE STRATIFICATION, PALETTISEUR À COLONNES ET PROCÉDÉ DE REMPLISSAGE D'UNE PALETTE

(43) Date of publication of application: 29.06.2022
(73) Proprietor: Transpak d.o.o., 9000 Murska Sobota (SI)
(72) Inventor: BUZETI, Simon, 9000 Murska Sobota (SI)
(74) Representative: Marn, Jure
(86) International application number: PCT/SI2020/050024
(87) International publication number: WO 2022/103340

(56) References cited:
- EP-A1- 2 112 097
- US-A1- 2009 220 327
- US-A1- 2015 246 444

## Description

### Field of technology

### Palletization

### Technical Problem

Technical problems which is solved with present invention is grouping the packages, and transferring a layer of said grouped packages onto a pallet, either as a first row, or any subsequent row, wherein said grouped packages are appropriately centered and positioned in order to maintain appropriate packages distribution on said pallet.

### State of the Art

In the past, layering heads have been available. However, they focused on different aspects of transferring the packages having spent additional operation, or mechanical stops in order to position grouped packages.

Patent application US2015246444 discloses a layering head according to the preamble of claim 1. Said document describes a gripping head for groups of products including a central support, connectable to a robotic arm, and at least two gripping elements associated with the central support from opposite sides, and mobile along a predetermined direction A at least from respective open positions to respective closed positions in which they are suitable for lifting the group of products. Each of said gripping elements includes means for moving the group of products forward along the predetermined direction A, and a respective opening suitable for allowing the group of products to pass along said predetermined direction A, pulled by said forward movement means

Patent application EP0007119 describes an object stacking device. In it, objects are gradually pushed across a table to form rows. Then the different rows are pushed against each other on a fork to form a layer of objects to be palletized. The layer is formed directly on the depositing fork. There is no transfer of a preformed layer of objects from a conveyor to a depositing tool. This has the drawback that the removal tool, here the fork, is immobilized throughout the shaping time of the layer to be palletized. Furthermore, the apparatus described in this same document comprises a track of arrival rollers which may have rollers driven by a motor followed by rollers which may be free to rotate. However, the transfer of a given object from the driven rollers to the free rollers is only achieved in full because the objects which follow this object, and are driven by the motorized rollers, push this object out of the motorized rollers. The document does not present a solution to finish the transfer of a layer of objects out of the motorized rollers.

Patent application DE102005023859 describes a solution wherein the grouping table for shrink-packs comprises a continuously operating conveyor which feeds the packs to a second conveyor which operates stepwise. A slide moves across the second conveyor and pushes packages on to a stacking table. The second conveyor has ribs on its surface to prevent packages from sliding forwards.

Patent application FR2554094 describes the transfer of a packet from upstream rollers to downstream rollers. The transfer of the packet takes place in full while the upstream rollers and the downstream rollers are both driven in rotation by a drive belt.

Patent application WO9849083 describes a solution wherein a slanted slider transfers the articles from the first conveyor to the second conveyor. Advancement speed and direction are synchronized in such a way that the speed components in the conveyor devices match the conveyance speeds of the conveyors. This enables articles to be transferred without time loss.

Patent application US200506381 describes describes a solution wherein an item-handling device, wherein a layer head includes an item layer building platform defining an item receiving plane, the layer building platform being vertically positionable. A puller bar mounts to the layer head and moves in relation thereto within a plane above the item-receiving plane. The puller bar is positionable between a retracted position above the layer building platform and an extended position offset from the layer building platform

Patent application EP1908709 describes a solution wherein a movably connected slide is provided for shifting of the bundles along a horizontal receiving direction through an open front side. The slide is provided for circumferential encompassing of the bundles and is shiftable between an outer position in front of the open front side and an inner position behind the open front side. Lateral sides running parallel to one another extend along the receiving direction of the bundles. Independent claims are also included for the following: a system for repositioning of bundle a method for receiving bundles a method for repositioning of the bundles.

Patent application EP2112097 describes a solution wherein the device has an actively driven continuous conveyor for transporting container layers in to a blind head, which comprises a securing element that is formed as a pivotable bracket. The container layers are secured at a side turned towards a continuous conveyor. The bracket loads the container layers with additional movable components in a transport unit. The conveyor is designed as a mat conveyor or formed as a ribbed modular conveyor belt. The conveyor comprises an integrated magnet. An independent claim is also included for a method for transferring container layers to a loading station of a transport device.

Patent application EP2610197 describes a solution wherein the palletizer has a conveyor that is equipped with an advancement module which advances a preformed layer of objects, to impart kinetic energy to the preformed layer of objects. A layer depositing tool is designed to deposit the preformed layer of objects onto a pallet. A transfer module is provided for transferring the preformed layer of objects, so that entirety of the preformed layer of objects leaves the conveyor and arrives on the layer depositing tool. The conveyor is designed as a conveyor-launcher to launch preformed layers of objects. An independent claim is included for a method for palletizing preformed layer of objects on pallet using conveyor and layer depositing tool.

State of the art palletizer often comprises a conveyor equipped with a motorized drive belt and a depositing tool having a surface of rollers free to rotate and equipped with an end arm of introduction. The rollers are for example mounted on bearings and are not connected to a drive motor. Some rollers do not support objects and some rollers are those on which objects roll. When no object is rolling over it, the rollers are stationary. Regarding the method, in a first training phase, a preformed layer of objects is driven from an initial position to an intermediate position. In this intermediate position, a part of the preformed layer of objects has already begun to be introduced onto the free rollers and there remains only one or a few objects on the conveyor belt.

The arrival of objects on the rollers is accompanied by the rotation of the indicated rollers. The setting in rotation of the rollers supposes to overcome the inertia of these rollers. This consumes part of the kinetic energy of the objects which are thus slowed down. In addition, the rotation of the rollers is accompanied by friction in their bearings which also slows down the objects. Objects are no longer trained as they were on mat. The driving of the objects 6a is due to the coefficient of friction exhibited by the objects on the belt. In the intermediate position, the or the few remaining objects on the belt generate a thrust force which may be insufficient to continue pushing all the other objects already on the free rollers. The end of introduction of the layer on the free rollers uses a complementary pushing means, and illustrated in the form of the arm equipped with a pusher. In the prior art, the pusher takes in loads at least the end of the introduction of the preformed layer of objects so that it finishes leaving the belt of the conveyor. In other words, the means for transferring the preformed object layer from the belt to the removal tool comprises not only the motorization of the belt, but also the actuation of the arm.

Such a method of transferring the conveyor to the removal tool has several drawbacks which contribute to a slow and expensive transfer. In fact, between the initial and final positions, the layer of objects is taken over by several drive means and . This involves a high cost and requires synchronization of these different means. This synchronization requires means of synchronization and time delays. In addition, the existence of the arm 5 and of the pusher can slow down the sequences of the palletizing process taking place, either before or after the transfer.

Thanks to the motorization of the rollers of the loading station, the objects arriving on these rollers are not slowed down and do not oppose the arrival on the loading station of the objects which are still on the conveyor. In other words, the means of transferring all of the preformed layer of objects from the conveyor to the loading station comprises not only the motorization of the conveyor but also the motorization of the rollers of the loading station and also includes the actuation of the securing arm.

### Description of new invention

The invention provides a layering head according to claim 1, a column palletizer according to claim 2 and a method for populating a pallet according to claim 3.

Column palletizer solves technical problem of grouping the packages, and transferring a layer of said grouped packages onto a pallet, either as a first row, or any subsequent row, wherein said grouped packages are appropriately centered and positioned in order to maintain appropriate packages distribution on said pallet by comprising at least one layering head used for positioning of said group of packages, said group of packages comprising at least one package to be positioned on the pallet.

Column palletizer according to this invention comprises at least one columns for driving of said layering head.

In preferred embodiment said layering head accepts said group of packages which has been pre-arranged on pre-arranging head which is comprised of transport chain covered with rubber or other friction surface, construction components for supporting of said transport chain, and a drive for driving of said transport chain.

Term transport chain should be understood as any kind of conveyer belt or similar moving mechanism for transporting group of packages, or individual packages, from one position to another.

Layering head according to this invention is used for positioning of said group of packages and depositing of said group of packages onto a pallet. Positioning of said group of packages is arranged by placing of said group of packages between four supports which through friction lock (force lock), or combination of force lock and positive lock mechanism. By maintaining of said force on said group of packages, said group of packages can be moved around without further support, including being positioned onto the top of a pallet, or previous layer which has been previously positioned on said pallet.

These four support mechanisms are comprised of lateral support mechanism comprised of two facing supports, and front-and-back support further comprised of two facing supports.

In addition, said layering head comprises rollers which are either driven, or freely rotatable around their axes, and pressing plates, said pressing plates for example driven using hydraulic cylinders, actuators, or similar. Said rollers can also be freely rotatable until such time that they engage with driving means upon which time they become driven.

Subject of this invention is therefore a layering head according to claim 1 comprising:
- surface of rollers comprised of at least two rollers;
- at least one roller of said surface of rollers driven by driving means;
- at least one roller of said surface of rollers starting to rotate after being placed into contact with at least part of at least one package of group of packages, and ceasing to rotate after said at least one package of group of packages has reached predetermined position, said group of packages comprised of at least one package;
- pressing plate to press onto said at least one roller of said surface of rollers to force movement of said at least one roller of surface of rollers determined by rotation of said at least one roller of surface of rollers;
- positioning means for positioning of said group of packages onto predetermined position;
- said positioning means to force lock or positive lock with said group of packages;
- said positioning means comprised of at least two facing lateral supports and of at least one front, and at least one back support, said front and back supports facing one another;
- said positioning means capable of transporting of said group of packages by form locking or positive locking with group of packages and moving it around by moving of said layering head;
- said surface of rollers capable of forming a gap in order to allow positioning of said group of packages onto a pallet, said pallet either empty or partially populated by previously deposited group of packages.

Said gap is formed by splitting of said surface of rollers into at least two surfaces of rollers, said at least two surfaces of rollers having each driving means for driving of said at least two surfaces of rollers each in opposite direction so said gap is formed in said layering head in order to allow positioning of said group of packages onto said pallet.

Said layering head is part of the column palletizer according to claim 2, said column palletizer further comprising pre-forming head to pre-form group of packages, said group of packages to be forwarded onto said layering head in order to be placed onto said pallet.

The method for transporting of group of packages according to claim 3 comprises the following steps:
- moving of group of packages up to surface comprised of rollers, said group of packages moving in the first direction, said group of packages comprised of at least one package;
- moving of group of packages so at least part of at least one of package of group of packages is in contact with at least one roller of surface comprised of rollers;
- starting to rotate at least one roller having contact with at least part of at least one of package of group of packages;
- pressing of pressing plate to the surface of said at least one roller having contact with at least part of at least one of package of group of packages, causing said roller to start moving along in the first direction, said movement causing at least one package of group of packages to move in the first direction;
- either releasing of said pressing plate, or disengaging of driving mechanism of said roller so said roller becomes freely rotatable, or stopping of said driving mechanism so said at least one package of group of packages stops;
- engaging four supports with said group of packages in order to position said group of packages to predetermined position;
- optionally moving said layering head onto predetermined position above a pallet to be populated, said pallet either empty or partially populated by previously deposited group of packages;
- engaging at least two rollers of said surface of rollers in such a way that at least one roller starts to move in the first direction, and at least one another roller either remains in position, or starts moving in the opposite direction to the first direction, or, in such a way that at least one roller remains in position, and at least one another roller starts moving in the opposite direction, so a gap is formed in said surface of rollers;
- depositing of said group of packages onto said pallet.

Below, the essence of the invention is presented with help of figures, as follows.

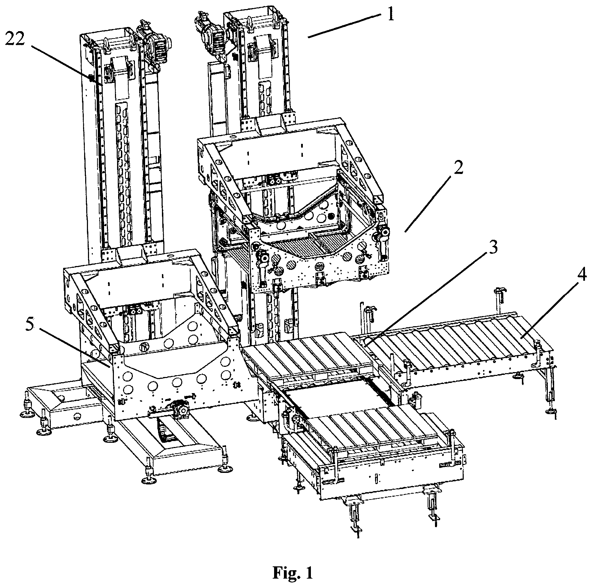

Figure 1 shows column 1, layering head 2, pallet 3, conveyers 4, pre-forming head 5, pre-forming head column 22.

Figure 1 is basic layout which can differ according to situation without changing the essence of the invention.

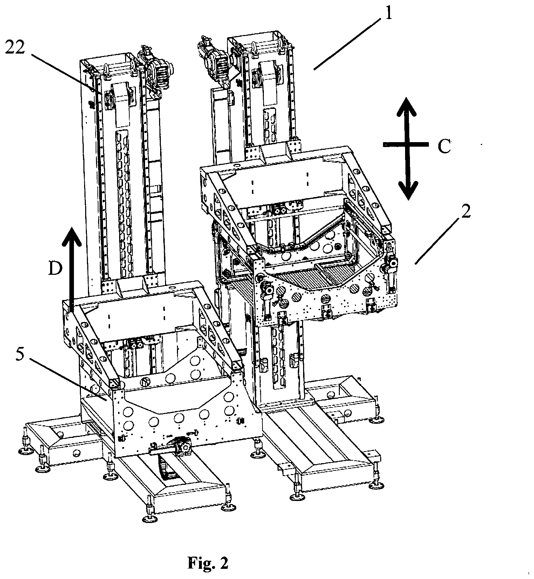

Figure 2 shows column 1, layering head 2, pre-forming head 5, pre-forming head column 22, direction of layering head movement C and direction of pre-forming head movement.

The method according to this invention is comprised of cycles which may be repeated, depending on number of layers to be deposited. During each cycle pre-forming head 5 rises while layering head moves up and down to deposit the layer and to accept the next layer.

Group of packages arrive into pre-forming head 5. There, the group is roughly formed on rubber (or some other sort of friction) pad or similar support. Then, the group is moved to layering head 2 for further processing. Of course, both heads can move up and down, but in this embodiment, the pre-forming head 5 only moves up (direction D) while layering head moves up and down (direction C).

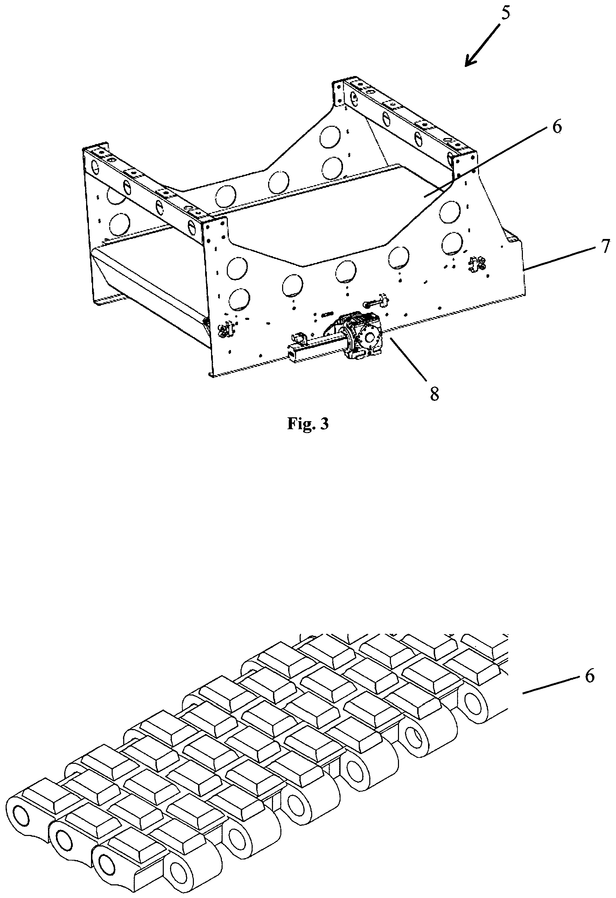

Figure 3 shows pre-forming head 5, rubber or some similar friction material pad which can be operated as a conveyer or chain 6, support components of said pre-forming head 7, and driving mechanism 8 for driving of said rubber or some similar friction material pad which can be operated as a conveyer or chain.

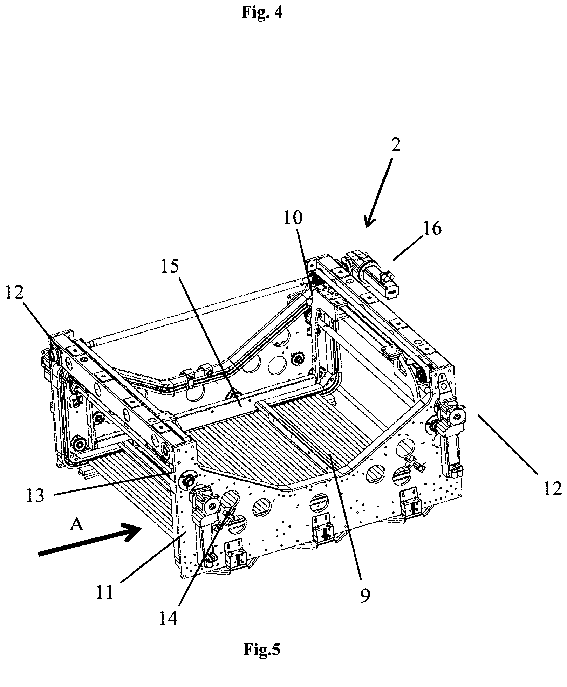

Figure 4 shows rubber or some similar friction material pad which can be operated as a conveyer or chain 6.

Figure 5 shows layering head 2 showing front support 9, drive for front support 10, surface of rollers 11, drive for rollers 12, back support 13, drive for back support 14, lateral support 15, drive for lateral support 16, the first direction A of moving of group of packages.

Figure 5 shows basic setup of subject of invention. The surface of rollers 11 moves the group of packages arriving into said layering head 2 in the first direction A until such time that group of packages impinge onto front support 9, or alternatively, group of packages stop, and then front support impinges onto said essentially stationary group of packages. Then said group of packages is pressed by back support 13 and two opposing (facing) lateral supports 15 in order that said group of packages is both positioned, and force or form locked by all four supports (front 9, back 13, both lateral 15 supports). Manner in which rollers surface 11 move is by rotating of said rollers of surface of rollers 11 using drive for rollers 12. This will be further explained below.

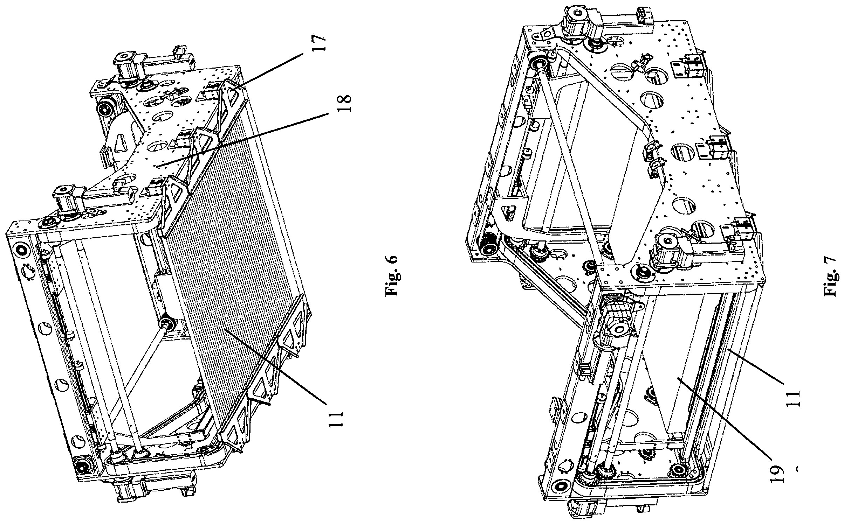

Figure 6 shows layering head showing said surface of rollers 11, pressing plate or plurality thereof 17, and pressing plate or plurality thereof cylinder 18.

The surface of rollers 11 start to rotate about their axes when at least part of group of packages comes into contact with at least one roller of surface of rollers 11. If roller is left to rotate, it will simply rotate and will not be controllably propelling said group of packages any further. In order to facilitate such move, there must be a reference surface pressed against such rotating roller. This is achieved by means of pressing plate or plurality thereof 17, said pressing plates driven by pressing plate cylinder 18.

Figure 7 shows group of packages 19 in said layering head being propelled onto predetermined approximate position on said surface of rollers 11.

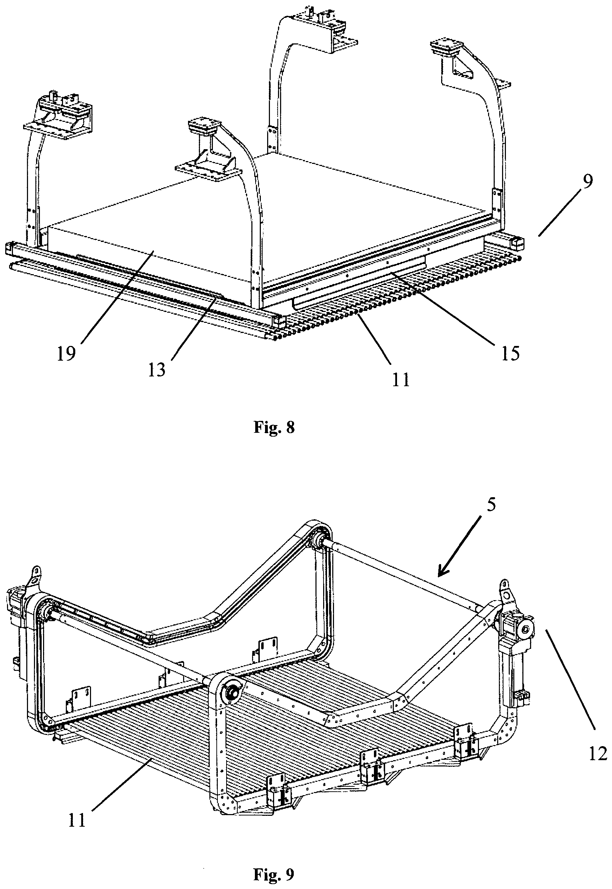

Figure 8 shows fine positioning of said group of packages 19 by means of four supports, i.e. front support 9, back support 13 and both lateral supports 15. Of course, there may be more supports. Said group of packages 19 which has been approximately positioned by means of surface of rollers 11 is now finely positioned to pre-determined position by means of four supports. These four supports can act in at least two different fashions. In the first case, the group of packages 19 is impinging onto the front support 9 by means of moving with help of surface of rollers, and effectively stopped by them. Then, the back support 13 further presses group of packages into the front support 9 in order to establish force lock in front-back direction. Then, both lateral supports 15 move one against another until such time that force lock in lateral direction is established. Now, group of packages 19 can be moved around to arrive at predetermined position. In the second case, the group of packages is approximately positioned by surface of rollers without impinging on any support. Then, the supports are pressed against said group of packages 19 in arbitrary predetermined fashion, and supports having form or force lock onto said group of packages 19 are moved around until predetermined position is achieved.

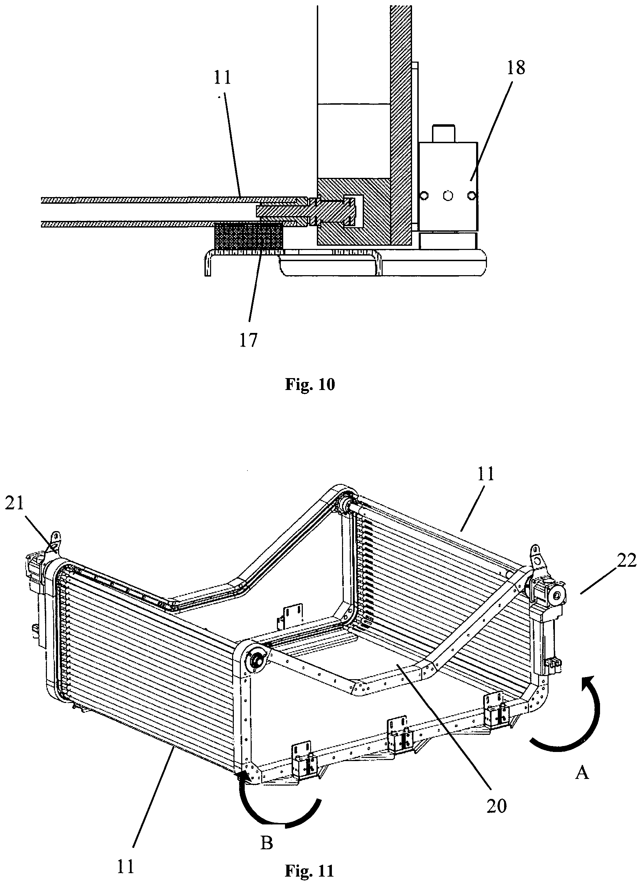

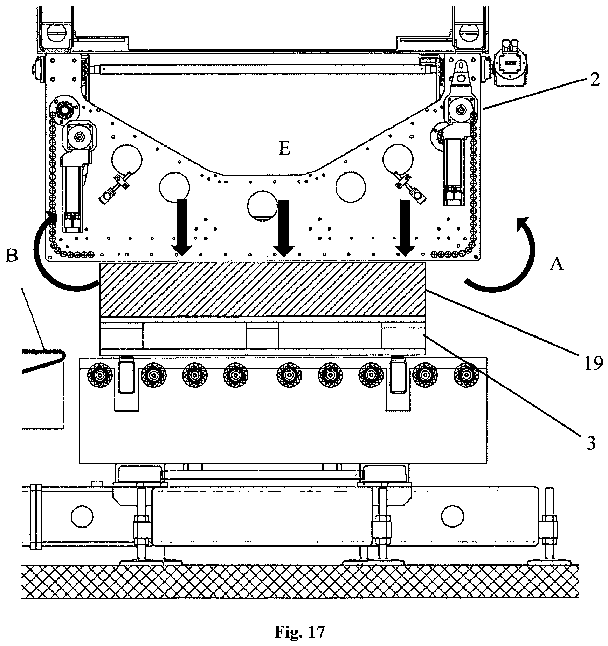

Figure 9 shows layering head 5 with surface of rollers 11 with their drive 12 in "closed" position. In such a case group of packages (not shown here) cannot be deposited onto said pallet (also not shown) as surface of rollers 11 forms bottom. In order to deposit said group of packages (not shown here) onto said pallet (also not shown) surface of rollers 11 must form a gap by driving in different directions which is seen in Figure 11 and Figure 17.

Figure 10 shows pressing plate 17 with its cylinder 18 (there can be plurality of those) pressing onto surface of rollers 11. By pressing pressing plate 17 onto surface of rollers 11 they no longer rotate around their own axes but start to move as they have a reference plane with high enough surface friction. If group of packages (not shown here) is positioned on the top of surface of rollers 11, said group of packages moves in direction of roller rotation as a result.

Figure 11 shows gap 20 between two groups of rollers of surface of rollers 11. One set moves in one direction B (opposite to the first direction A), and another in first direction A. By so moving, there is a gap 20 formed instead of bottom. Now, group of packages (not shown here) can be deposited onto said pallet (also not shown here) as they are only held with force or form (positive) lock of said supports (not shown here). Both drives 22, 21 in the first A and the opposite B directions, respectively, are shown.

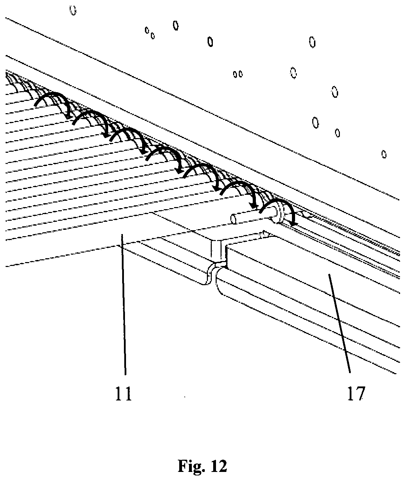

Figure 12 shows depiction of pressing plate 17 function. During rotation of rollers forming surface of rollers 11 pressing plate 17 is pressed against said surface of rollers 11 forcing said rollers to start moving rather than just rotating around their respective axes.

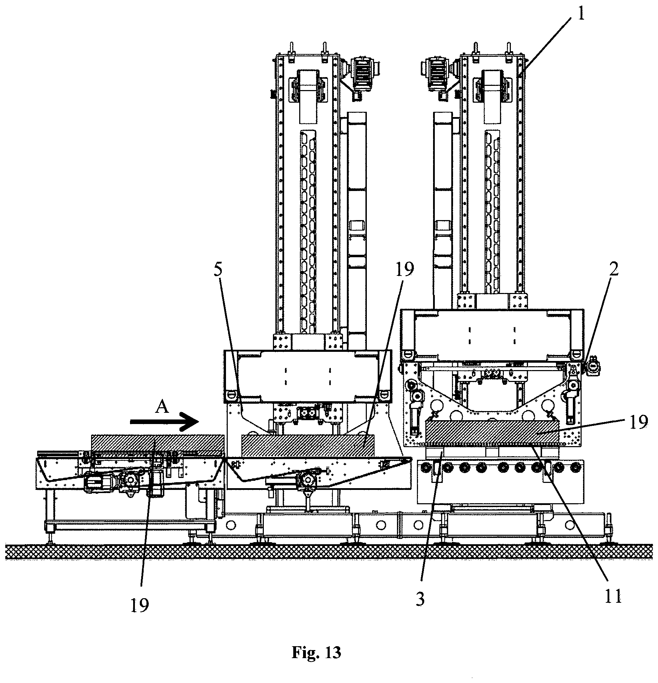

Figure 13 shows method of operation. Group of packages (which can be group of beer cans, bottles, post packages, plates, etc.) 19 is moving onto pre-forming head 5. Therein said group of packages 19 is roughly formed on rubber (or some other sort of friction) pad or similar support. Then, pre-forming head 5 is elevated onto same level as surface of rollers 11 of said layering head. Pallet 3 is also seen. On this figure, the pallet 3 shows no previously deposited groups of packages but this is just one case - of course, there can be already group of packages or plurality thereof deposited in one layer or plurality thereof. In fact three distinct groups of packages 19 are shown - one coming in the first direction A toward pre-forming head 5, one already in pre-forming head 5 and one in layering head 2. So, after three cycles are to be complete, three layers of group of packages would be formed on said pallet 3. Or, alternatively, some of group of packages could be positioned next to each other, depending on programming, but in this embodiment, three layers would be formed.

Pre-forming head 5 must be elevated to the level of surface of rollers 11 of layering head 2.

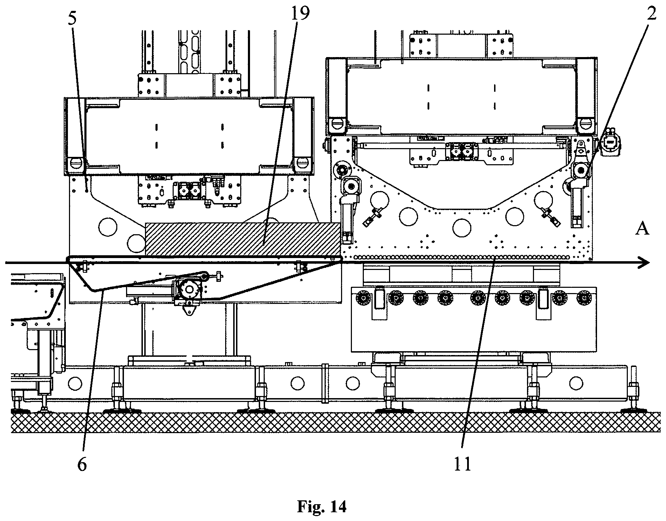

Figure 14 shows so aligned pre-forming head 5 and layering head 2 while group of packages is traversing from said pre-forming head 5 to said layering head 2 to get into contacts first with at least one roller of said surface of rollers 11. Rubber (or some other sort of friction) pad or similar support 6 in form of conveyer is also seen. Then, pre-forming head 5 is elevated onto same level as surface of rollers 11 of said layering head 2. Pallet 3 is also shown.

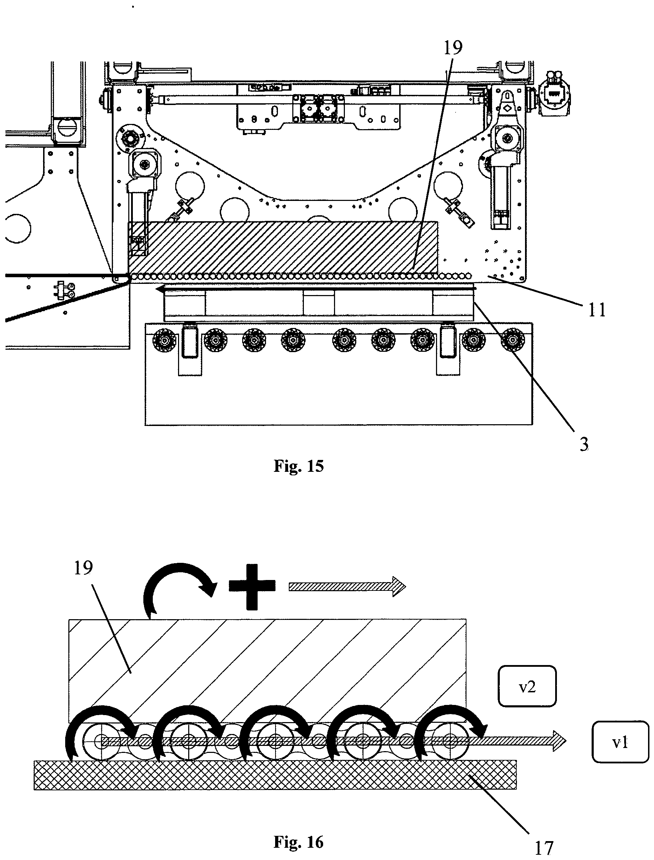

Figure 15 shows the group of packages 19 positioned on said surface of rollers 11 of said layering head 2. Some of rollers of said surface of rollers 11 are shown in white, and some in black, indicating which rollers are to move in the first direction (white) and which in opposite direction (black) when forming a gap through which said group of packages can be deposited onto said pallet 3.

Figure 16 is again explaining movement of group of packages 19 with help of rotating rollers of surface of rollers 11 by pressing pressing plate 17 onto said rollers.

Figure 17 shows final act of depositing said group of packages 19 onto said pallet 3. Said surface of rollers 11 has now been opened by some of rollers of said surface of rollers 11 traveling in the first direction A, and some in the opposite direction B thus forming a gap 20. Now, group of packages has been lowered in direction E onto said pallet, said supports (9, 13, 15) have been relaxed, and group of packages deposited onto said pallet, finishing this cycle.

## Claims

1. A layering head (2) for placing of group of packages comprising at least one package, said layering head (2) further comprising:
- surface of rollers (11) comprised of at least two rollers;
- driving means (12) for driving at least one roller of said surface of rollers (11);
- at least one roller of said surface of rollers (11) starting to rotate after being placed into contact with at least part of at least one package of group of packages, and ceasing to rotate after said at least one package of group of packages has reached predetermined position, said group of packages comprised of at least one package;
- positioning means for positioning of said group of packages onto predetermined position;
- said positioning means to force lock or positive lock with said group of packages;
- said positioning means comprised of at least two facing lateral supports (15) and of at least one front (9), and at least one back support (13), said front (9) and back (13) supports facing one another;
- said positioning means capable of transporting of said group of packages by form locking or positive locking with group of packages and moving it around by moving of said layering head (2);
- said surface of rollers capable of forming a gap (20) in order to allow positioning of said group of packages onto a pallet (3), said pallet (3) either empty or partially populated by previously deposited group of packages; said gap (20) formed by splitting of said surface of rollers (11) into at least two surfaces of rollers, said at least two surfaces of rollers having each at least one drive (21, 22) for driving of said at least two surfaces of rollers each in opposite direction so said gap (20) is formed in said layering head (2) in order to allow positioning of said group of packages onto said pallet (3); **characterised in that** the layering head (2) comprises a pressing plate (17) to press onto said at least one roller of said surface of rollers (11) to force movement of said at least one roller of surface of rollers (11) determined by rotation of said at least one roller of surface of rollers (11).

2. A column palletizer comprising said layering head (2) according to claim 1, and at least one pre-forming head (5) to pre-form group of packages, said group of packages to be forwarded onto said layering head (2) in order to be placed onto said pallet (3).

3. A method for populating a pallet (3) by transporting of group of packages, said method carried out by layering head (2) according to claim 1, said method comprised of the following steps:
- moving of group of packages up to the surface of rollers (11), said group of packages moving in the first direction (A), said group of packages comprised of at least one package;
- moving of group of packages so at least part of at least one of package of group of packages is in contact with at least one roller of surface comprised of rollers (11);
- starting to rotate at least one roller having contact with at least part of at least one of package of group of packages;
- pressing of the pressing plate (17) to the surface of said at least one roller having contact with at least part of at least one of package of group of packages, causing said roller to start moving along in the first direction (A), said movement causing at least one package of group of packages to move in the first direction (A);
- either releasing of said pressing plate (17), or disengaging of the driving means (12) of said roller so said roller becomes freely rotatable, or stopping of said driving means (12) so said at least one package of group of packages stops;
- engaging the four supports (9, 13, 15) with said group of packages in order to position said group of packages to predetermined position;
- optionally moving said layering head (2) onto predetermined position above a pallet (3) to be populated, said pallet (3) either empty or partially populated by previously deposited group of packages;
- engaging at least two rollers of said surface of rollers (11) by the drives (21, 22) in such a way that at least one roller starts to move in the first direction (A), and at least one another roller either remains in position, or starts moving in the opposite direction (B) to the first direction (A), or, in such a way that at least one roller remains in position, and at least one another roller starts moving in the opposite direction (B), so a gap (20) is formed in said surface of rollers (11);
- depositing of said group of packages onto said pallet (3).

4. A method according to claim 3 wherein surface of rollers (11) move said group of packages arriving into said layering head (2) in the first direction (A) until such time that said group of packages either impinge onto front support (9), or alternatively, said group of packages stop, and then front support (9) impinges onto said essentially stationary group of packages.

5. A method according to claim 4 wherein said group of packages is pressed by back support (13) and two opposing lateral supports (15) until such time that said group of packages is both positioned, and force or form locked by all four supports (9, 13, 15) wherein the manner in which rollers surface (11) moves is by rotating of said rollers of surface of rollers (11) using drive for rollers (12).

6. A method according to any of claims 3 to 5 wherein said pre-forming head (5) is adjusting to height of said layering head (2) in order to provide for each layer of group of packages (19) to be deposited onto said pallet (3).

## Patentansprüche

1. Legekopf (2) zum Platzieren einer Gruppe von Paketen, die mindestens ein Paket umfasst, wobei der Legekopf (2) ferner Folgendes umfasst:
- eine Oberfläche aus Rollen (11), die aus mindestens zwei Rollen umfasst ist;
- Antriebsmittel (12) zum Antreiben von mindestens einer Rolle der Oberfläche aus Rollen (11);
- wobei mindestens eine Rolle der Oberfläche aus Rollen (11) sich zu drehen beginnt, nachdem sie mit mindestens einem Teil von mindestens einem Paket einer Gruppe von Paketen in Kontakt gebracht wurde, und aufhört, sich zu drehen, nachdem das mindestens eine Paket einer Gruppe von Paketen eine vorbestimmte Position erreicht hat, wobei die Gruppe von Paketen aus mindestens einem Paket umfasst ist;
- Positionierungsmittel zum Positionieren der Gruppe von Paketen an einer vorbestimmten Position;
- wobei die Positionierungsmittel zum Kraftschluss oder Formschluss mit der Gruppe von Paketen vorgesehen sind;
- wobei die Positionierungsmittel aus mindestens zwei gegenüberliegenden seitlichen Stützen (15) und aus mindestens einer vorderen (9) und mindestens einer hinteren Stütze (13) umfasst sind, wobei die vordere (9) und die hintere (13) Stütze einander gegenüberliegen;
- wobei die Positionierungsmittel in der Lage sind, die Gruppe von Paketen durch Kraftschluss oder Formschluss mit einer Gruppe von Paketen zu transportieren und sie durch Bewegen des Legekopfes (2) herumzufahren;
- wobei die Oberfläche aus Rollen in der Lage ist, einen Spalt (20) zu bilden, um das Positionieren der Gruppe von Paketen auf einer Palette (3) zu ermöglichen, wobei die Palette (3) entweder leer oder teilweise mit einer zuvor abgelegten Gruppe von Paketen bestückt ist; wobei der Spalt (20) durch Aufteilen der Oberfläche aus Rollen (11) in mindestens zwei Oberflächen aus Rollen gebildet wird, wobei die mindestens zwei Oberflächen aus Rollen jeweils mindestens einen Antrieb (21, 22) zum Antreiben der mindestens zwei Oberflächen aus Rollen in jeweils entgegengesetzter Richtung aufweisen, sodass der Spalt (20) in dem Legekopf (2) gebildet wird, um das Positionieren der Gruppe von Paketen auf der Palette (3) zu ermöglichen; **dadurch gekennzeichnet, dass** der Legekopf (2) eine Pressplatte (17) umfasst, um auf die mindestens eine Rolle der Oberfläche aus Rollen (11) zu drücken, um eine Bewegung der mindestens einen Rolle der Oberfläche aus Rollen (11) zu erzwingen, die durch die Drehung der mindestens einen Rolle der Oberfläche aus Rollen (11) bestimmt wird.

2. Säulenpalettierer, umfassend den Legekopf (2) nach Anspruch 1 und mindestens einen Vorformungskopf (5) zum Vorformen einer Gruppe von Paketen, wobei die Gruppe von Paketen auf den Legekopf (2) weitergeleitet werden soll, um auf der Palette (3) platziert zu werden.

3. Verfahren zum Bestücken einer Palette (3) durch Transportieren einer Gruppe von Paketen, wobei das Verfahren durch einen Legekopf (2) nach Anspruch 1 durchgeführt wird, wobei das Verfahren aus folgenden Schritte umfasst ist:
- Bewegen einer Gruppe von Paketen bis zur Oberfläche aus Rollen (11), wobei sich die Gruppe von Paketen in der ersten Richtung (A) bewegt, wobei die Gruppe von Paketen aus mindestens einem Paket umfasst ist;
- Bewegen einer Gruppe von Paketen, sodass zumindest ein Teil von mindestens einem Paket einer Gruppe von Paketen mit mindestens einer Rolle der aus Rollen (11) umfassten Oberfläche in Kontakt ist;
- Beginnen, mindestens eine Rolle zu drehen, die mit mindestens einem Teil von mindestens einem Paket einer Gruppe von Paketen Kontakt aufweist;
- Andrücken der Pressplatte (17) an die Oberfläche der mindestens einen Rolle, die mit mindestens einem Teil von mindestens einem Paket einer Gruppe von Paketen Kontakt aufweist, wodurch bewirkt wird, dass die Rolle beginnt, sich in der ersten Richtung (A) entlang zu bewegen, wobei die Bewegung bewirkt, dass sich mindestens ein Paket einer Gruppe von Paketen in der ersten Richtung (A) bewegt;
- entweder Lösen der Pressplatte (17) oder Auskuppeln des Antriebsmittels (12) der Rolle, sodass die Rolle frei drehbar wird, oder Anhalten des Antriebsmittels (12), sodass das mindestens eine Paket einer Gruppe von Paketen anhält;
- Ineinandergreifen der vier Stützen (9, 13, 15) mit der Gruppe von Paketen, um die Gruppe von Paketen in einer vorbestimmten Position zu positionieren;
- optional Bewegen des Legekopfes (2) an eine vorbestimmte Position über einer zu bestückenden Palette (3), wobei die Palette (3) entweder leer oder teilweise mit einer zuvor abgelegten Gruppe von Paketen bestückt ist;
- Ineinandergreifen von mindestens zwei Rollen der Oberfläche aus Rollen (11) durch die Antriebe (21, 22) auf eine solche Weise, dass mindestens eine Rolle beginnt, sich in die erste Richtung (A) zu bewegen, und mindestens eine andere Rolle entweder an ihrer Position verbleibt oder beginnt, sich in die zur ersten Richtung (A) entgegengesetzte Richtung (B) zu bewegen, oder auf eine solche Weise, dass mindestens eine Rolle an ihrer Position verbleibt und mindestens eine andere Rolle beginnt, sich in die entgegengesetzte Richtung (B) zu bewegen, sodass in der Oberfläche aus Rollen (11) ein Spalt (20) gebildet wird;
- Ablegen der Gruppe von Paketen auf der Palette (3).

4. Verfahren nach Anspruch 3,
wobei die Oberfläche aus Rollen (11) die in den Legekopf (2) eintreffende Gruppe von Paketen in die erste Richtung (A) bewegt, bis zu einem Zeitpunkt, an dem die Gruppe von Paketen entweder auf die vordere Stütze (9) auftrifft oder alternativ die Gruppe von Paketen anhält und dann die vordere Stütze (9) auf die im Wesentlichen feststehende Gruppe von Paketen auftrifft.

5. Verfahren nach Anspruch 4,
wobei die Gruppe von Paketen durch die hintere Stütze (13) und zwei gegenüberliegende seitliche Stützen (15) gedrückt wird, bis zu einem Zeitpunkt, an dem die Gruppe von Paketen sowohl positioniert als auch durch alle vier Stützen (9, 13, 15) kraft- oder formschlüssig verbunden ist, wobei die Art und Weise, in der sich die Oberfläche aus Rollen (11) bewegt, durch Drehen der Rollen der Oberfläche aus Rollen (11) unter Verwendung eines Antriebs für die Rollen (12) erfolgt.

6. Verfahren nach einem der Ansprüche 3 bis 5, wobei sich der Vorformungskopf (5) an die Höhe des Legekopfes (2) anpasst, um dafür zu sorgen, dass jede Schicht einer Gruppe von Paketen (19) auf der Palette (3) abgelegt wird.

## Revendications

1. Tête de stratification (2) pour la mise en place d'un groupe de paquets comprenant au moins un paquet, ladite tête de stratification (2) comprenant en outre :
- une surface de rouleaux (11) composée d'au moins deux rouleaux ;
- un moyen d'entraînement (12) pour l'entraînement d'au moins un rouleau de ladite surface de rouleaux (11) ;
- au moins un rouleau de ladite surface de rouleaux (11) commençant à tourner après avoir été placé en contact avec au moins une partie d'au moins un paquet de groupe de paquets, et cessant de tourner après que ledit au moins un paquet de groupe de paquets a atteint une position prédéterminée, ledit groupe de paquets étant composé d'au moins un paquet ;
- un moyen de positionnement pour le positionnement dudit groupe de paquets sur une position prédéterminée ;
- ledit moyen de positionnement permet de forcer le verrouillage ou le verrouillage positif avec ledit groupe de paquets ;
- ledit moyen de positionnement étant composé d'au moins deux supports latéraux (15) en vis-à-vis et d'au moins un support avant (9) et d'au moins un support arrière (13), lesdits supports avant (9) et arrière (13) étant en vis-à-vis ;
- ledit moyen de positionnement étant capable de transporter ledit groupe de paquets par verrouillage de forme ou verrouillage positif avec le groupe de paquets et de le déplacer en déplaçant ladite tête de stratification (2) ;
- ladite surface de rouleaux étant capable de former un espace (20) afin de permettre le positionnement dudit groupe de paquets sur une palette (3), ladite palette (3) étant soit vide, soit partiellement remplie par un groupe de paquets préalablement déposé ; ledit espace (20) étant formé par division de ladite surface de rouleaux (11) en au moins deux surfaces de rouleaux, lesdites au moins deux surfaces de rouleaux comportant chacune au moins un entraînement (21, 22) pour l'entraînement desdites au moins deux surfaces de rouleaux chacune dans une direction opposée de sorte que ledit espace (20) est formé dans ladite tête de stratification (2) afin de permettre le positionnement dudit groupe de paquets sur ladite palette (3) ; **caractérisée en ce que** la tête de stratification (2) comprend une plaque de pression (17) pour appuyer sur ledit au moins un rouleau de ladite surface de rouleaux (11) pour forcer le mouvement dudit au moins un rouleau de ladite surface de rouleaux (11) déterminé par rotation dudit au moins un rouleau de ladite surface de rouleaux (11).

2. Palettiseur à colonnes comprenant ladite tête de stratification (2) selon la revendication 1,
et au moins une tête de préformation (5) pour préformer un groupe de paquets, ledit groupe de paquets devant être transféré sur ladite tête de stratification (2) afin d'être placé sur ladite palette (3).

3. Procédé permettant le remplissage d'une palette (3) en transportant un groupe de paquets, ledit procédé étant mis en œuvre par tête de stratification (2) selon la revendication 1, ledit procédé étant composé des étapes suivantes :
- le déplacement d'un groupe de paquets jusqu'à la surface de rouleaux (11), ledit groupe de paquets se déplaçant dans la première direction (A), ledit groupe de paquets étant composé d'au moins un paquet ;
- le déplacement d'un groupe de paquets de sorte qu'au moins une partie d'au moins un paquet de groupe de paquets est en contact avec au moins un rouleau de surface composée de rouleaux (11) ;
- le commencement de rotation d'au moins un rouleau présentant un contact avec au moins une partie d'au moins un paquet de groupe de paquets ;
- la pression de la plaque de pression (17) sur la surface dudit au moins un rouleau présentant un contact avec au moins une partie d'au moins un paquet de groupe de paquets, amenant ledit rouleau à commencer à se déplacer dans la première direction (A), ledit mouvement amenant au moins un paquet de groupe de paquets à se déplacer dans la première direction (A) ;
- soit la libération de ladite plaque de pression (17), soit le dégagement du moyen d'entraînement (12) dudit rouleau de sorte que ledit rouleau devienne librement rotatif, soit l'arrêt dudit moyen d'entraînement (12) de sorte que ledit au moins un paquet de groupe de paquets s'arrête ;
- la mise en prise des quatre supports (9, 13, 15) avec ledit groupe de paquets afin de positionner ledit groupe de paquets dans une position prédéterminée ;
- le déplacement éventuel de ladite tête de stratification (2) sur une position prédéterminée au-dessus d'une palette (3) à remplir, ladite palette (3) étant soit vide, soit partiellement remplie par un groupe de paquets déposés précédemment ;
- la mise en prise d'au moins deux rouleaux de ladite surface de rouleaux (11) par les entraînements (21, 22) de manière qu'au moins un rouleau commence à se déplacer dans la première direction (A), et au moins un autre rouleau reste en position, ou commence à se déplacer dans la direction opposée (B) à la première direction (A), ou, de manière qu'au moins un rouleau reste en position, et au moins un autre rouleau commence à se déplacer dans la direction opposée (B), de sorte qu'un espace (20) est formé dans ladite surface de rouleaux (11) ;
- le dépôt dudit groupe de paquets sur ladite palette (3).

4. Procédé selon la revendication 3,
dans lequel la surface de rouleaux (11) déplace ledit groupe de paquets arrivant dans ladite tête de stratification (2) dans la première direction (A) jusqu'à ce que ledit groupe de paquets heurte le support avant (9), ou bien, que ledit groupe de paquets s'arrête, et qu'ensuite le support avant (9) heurte ledit groupe de paquets essentiellement stationnaire.

5. Procédé selon la revendication 4,
dans lequel ledit groupe de paquets est pressé par un support arrière (13) et deux supports latéraux opposés (15) jusqu'à ce que ledit groupe de paquets soit à la fois positionné et verrouillé par force ou forme par les quatre supports (9, 13, 15) dans lequel la manière dont une surface de rouleaux (11) se déplace est par rotation desdits rouleaux de surface de rouleaux (11) à l'aide d'un entraînement pour rouleaux (12).

6. Procédé selon l'une quelconque des revendications 3 à 5, dans lequel ladite tête de préformation (5) s'ajuste à hauteur de ladite tête de stratification (2) afin de permettre à chaque couche de groupe de paquets (19) d'être déposée sur ladite palette (3).
